(19) Europäisches Patentamt
European Patent Office
Office européen des brevets

(11) Veröffentlichungsnummer: **0 150 674**
**B1**

(12) **EUROPÄISCHE PATENTSCHRIFT**

(45) Veröffentlichungstag der Patentschrift: **01.04.87**

(51) Int. Cl.⁴: **C 09 J 7/00**, C 09 J 3/14, C 08 F 283/10

(21) Anmeldenummer: **84810635.7**

(22) Anmeldetag: **18.12.84**

(54) **Verfahren zur Herstellung von heisshärtbaren Klebefilmen.**

(30) Priorität: **27.12.83 CH 6927/83**

(43) Veröffentlichungstag der Anmeldung: **07.08.85 Patentblatt 85/32**

(45) Bekanntmachung des Hinweises auf die Patenterteilung: **01.04.87 Patentblatt 87/14**

(84) Benannte Vertragsstaaten: **CH DE FR GB IT LI NL SE**

(56) Entgegenhaltungen:
**GB - A - 2 109 798**
**GB - A - 2 119 810**

(73) Patentinhaber: **CIBA-GEIGY AG, Klybeckstrasse 141, CH-4002 Basel (CH)**

(72) Erfinder: **Forgo, Imre, Dr., Am Stausee 27/16, CH-4127 Birsfelden (CH)**
Erfinder: **Huwyler, René, Dr., Bärenfelsweg 5, CH-4147 Aesch (CH)**
Erfinder: **François, Jacques, 4, Rue de l'Abattoir, F-68330 Huningue (FR)**

EP 0 150 674 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein neues Verfahren zur Herstellung von heisshärtbaren Klebefilmen mit variabler Klebrigkeit sowie die mit diesem Verfahren erhältlichen heisshärtbaren Klebefilme und deren Verwendung zum Verkleben von Substraten.

Für verschiedene Anwendungen, vor allem zum Verkleben von Substraten oder Gegenständen aus unterschiedlichen Materialien oder Materialien mit unterschiedlicher Oberflächenbeschaffenheit, z.B. ölige und nicht ölige Metalloberflächen, Substraten aus Holz und Metallen, oder aus Glas oder Keramik und Metallen, sind Klebefilme mit unterschiedlicher, den zu verklebenden Substraten angepasster Klebrigkeit auf den beiden Seiten erwünscht.

Es wurde gefunden, dass man heisshärtbare Klebefilme mit unterschiedlicher Klebrigkeit auf beiden Seiten dadurch herstellen kann, dass man

1. eine abziehbare Trennfolie oder Unterlage mit einem flüssigen Stoffgemisch, enthaltend

(a) 2-24 Gew.-% einer photopolymerisierbaren Verbindung mit mindestens einer Gruppierung $CH_2=C(R)COO$-, worin R ein Wasserstoffatom oder eine Methylgruppe bedeutet,

(b) 20-90 Gew.-% eines keine photopolymerisierbaren Gruppen aufweisenden heisshärtbaren Epoxidharzes oder Epoxidharzgemisches,

(c) einen hitzeaktivierbaren Härter für Epoxidharze,

(d) 0,1 bis 2 Gew.-% eines Beschleunigers,

(e) 0,01 bis 5 Gew.-% eines Photopolymerisationskatalysators für die Komponente (a) und

(f) gegebenenfalls weitere Zusätze

beschichtet, wobei sich die Komponenten (a) bis (f) auf 100 Gew.-% ergänzen,

2. die Schicht gegebenenfalls mit einem Verstärkungsmaterial, z.B. einem Vlies, abdeckt und erneut mit einem Stoffgemisch gemäss 1) beschichtet, und

3. die so erhaltene Schicht mit aktinischem Licht bestrahlt.

Die Operation 2) kann auch mehrmals vorgenommen werden.

Nach dem erfindungsgemässen Verfahren lassen sich einstufig, d.h. in einem Arbeitsgang, auf sehr einfache und wirtschaftliche Weise bei relativ tiefen Temperaturen Klebefolien mit variabler Klebrigkeit herstellen, und zwar ist die auf der Trennfolie aufliegende Seite des Klebefilms im allgemeinen trocken bzw. weniger klebrig als die direkt der Bestrahlung mit aktinischem Licht ausgesetzte Seite. Anschliessend können mit den so erhaltenen heisshärtbaren Klebefilmen Substrate auf übliche Weise unter Erwärmen, vorzugsweise auf Temperaturen zwischen 70° und 200°C, verklebt werden. Die gewünschte Klebrigkeit kann leicht durch Variation des Gehalts an Komponente(n) (a) bzw. durch Wahl bestimmter Komponenten (a) eingestellt werden. Die Erfindungsgemäss hergestellten Klebefilme zeichnen sich ferner durch eine gute Lagerstabilität und eine gute Kalt-warm-Feuchtigkeitsbeständigkeit aus. Die Klebrigkeit der Filme ist wenig temperaturabhängig und bleibt auch nach längerer Lagerung erhalten.

Die erfindungsgemäss erhaltenen Klebefilme können gewünschtenfalls mit einer weiteren heisshärtbaren Klebeschicht versehen werden. Dafür eignen sich z.B. heisshärtbare Epoxidharz-Systeme, insbesondere solche der in der US-PS 3 641 195 beschriebenen Art. Diese enthalten

(i) ein Epoxidharz oder Epoxidharzgemisch, das in feinteiliger Form in

(ii) einem thermoplastischen Copolymer aus einem α-Olefin und einem Äther oder Ester eines α-Olefins dispergiert ist, und

(iii) einen Härter für das Epoxidharz (i).

Als Komponente (ii) werden vorzugsweise Äthylenvinylacetat- oder Äthylenäthylacetat-Copolymere verwendet. Mit dieser zusätzlichen Beschichtung werden Klebefilme erhalten, die auf der auf der Trennfolie aufliegenden Seite trocken bis klebrig und auf der anderen freiliegenden Seite je nach Art des eingesetzten Epoxidharzsystems trocken bis klebrig sind.

Bevorzugt ist die einstufige Herstellung von Klebefilmen wie im Vorangehenden beschrieben. Als Komponenten (a) kommen insbesondere Verbindungen der Formel I

$$[CH_2=C(R)COO]_{n}\!-\!X \qquad (I)$$

in betracht, worin R ein Wasserstoffatom oder eine Methylgruppe, n eine ganze Zahl von 1-4 und X bei n = 1 Alkyl mit 1-12 C-Atomen, Hydroxyalkyl mit 1-4 C-Atomen, Alkoxyalkyl mit 2-8 C-Atomen, 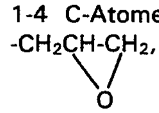, Cyclopentyl, Cyclohexyl, Phenyl, 2-Furyl, 2- oder 3-Pyridyl, bei n = 2 eine Gruppe $-C_rH_{2r}-$ mit r = 2-12, $-[CH_2CH_2O]_mCH_2CH_2-$ mit m = 1, 2 oder 3 oder

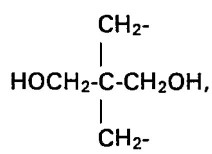,

bei n = 3

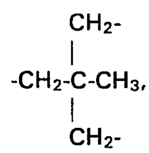, 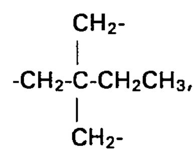, 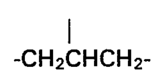

oder 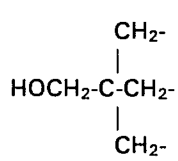

und bei n = 4 eine Gruppe

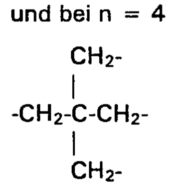 oder 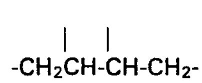

bedeuten.

Alkyl-, Hydroxyalkyl-, Alkoxyalkyl- und Alkenylgruppen X können geradkettig oder verzweigt sein. X in der Bedeutung einer Alkylgruppe weist insbesondere 1-8 und vor allem 1-4 C-Atome auf. Hydroxyalkylgruppen X haben bevorzugt 2 oder 3 C-Atome, und als Alkoxyalkylgruppen X werden solche mit 2-6 C-Atomen bevorzugt. Beispiele geeigneter Alkyl-, Hydroxyalkyl- und Alkoxyalkylgruppen X sind: Methyl, Äthyl, n-Propyl, Isopropyl, Butyl, Isobutyl, n-Pentyl, n-Hexyl, 2-Äthylhexyl, n-Octyl, n-Decyl und n-Dodecyl; Hydroxymethyl, 2-Hydroxyäthyl, 2- oder 3-Hydroxypropyl; Äthoxymethyl, 2-Methoxyäthyl, 2-Äthoxyäthyl, 3-Methoxypropyl, 3-Äthoxypropyl.

Gruppen $-C_rH_{2r}-$ können ebenfalls geradkettig oder verzweigt sein. r stellt bevorzugt 2-6 dar. Besonders bevorzugt sind Gruppen $-(CH_2)_r-$ mit r = 2-6.

Als Beispiele von Verbindungen der Formel I seinen genannt: Methyl-, Äthyl-, n-Propyl-, n-Butyl-, Isobutyl-, n-Hexyl-, 2-Äthylhexyl-, n-Octyl-, n-Decyl- und n-Dodecylacrylat und -methacrylat, 2-Hydroxyäthyl-, 2- und 3-Hydroxypropylacrylat und -methacrylat, 2-Methoxyäthyl-, 2-Äthoxyäthyl- und 2- oder 3-Äthoxypropylacrylat und -methacrylat, Allylacrylat und -methacrylat, Glycidylacrylat und -methacrylat, Cyclopentyl- und Cyclohexylacrylat und -methacrylat, Acrylsäure- und Methacrylsäurephenylester, Äthylenglykoldiacrylat, Äthylenglykoldimethacrylat, Diäthylenglykoldiacrylat, Diäthylenglykoldimethacrylat, Triäthylenglykoldiacrylat, Triäthylenglykoldimethacrylat, Tetraäthylenglykoldiacrylat, Tetraäthylenglykoldimethacrylat, 1,1,1-Trimethyloläthantriacrylat, 1,1,1-Trimethyloläthantrimethacrylat, 1,1,1-Trimethylolpropantriacrylat, 1,1,1-Trimethylolpropantrimethacrylat, Glycerintriacrylat, Glycerintrimethacrylat, Pentaerythritdiacrylat, Pentaerythritdimethacrylat, Pentaerythrittriacrylat, Pentaerythrittrimethacrylat, Pentaerythrittetraacrylat und Pentaerythrittetramethacrylat, Butandiol-1,3-diacrylat, Butandiol-1,3--dimethacrylat, Butandiol-1,4-diacrylat,Butandiol--1,4-dimethacrylat,Hexandiol-1,6-diacrylat, Hexandiol-1,6-dimethacrylat, Propandiol-1,3-diacrylat, propandiol-1,3-dimethacrylat, Octandiol-1,8-diacrylat, Octandiol-1,8-dimethacrylat, Dodecandiol--1,12-diacrylat, Dodecandiol-1,12-dimethacrylat.

Es können auch Gemische verschiedener Komponenten (a) eingesetzt werden.

Bevorzugt verwendet man als Komponente (a) Verbindungen der Formel I, worin R ein Wasserstoffatom oder eine Methylgruppe bedeutet, n eine ganze Zahl von 1-4 ist, und X bei n = 1 Hydroxyalkyl mit 2 oder 3 C-Atomen oder Alkoxyalkyl mit 2-6 C-Atomen, bei n = 2 eine Gruppe $-(CH_2)_r-$ mit r = 2-6, $-CH_2CH_2OCH_2CH_2-$ oder

$CH_2-$
|
$HOCH-C-CH_2OH$,
|
$CH_2-$

bei n = 3

$CH_2-$ | $-CH_2-C-CH_2CH_3$ | $CH_2-$ oder $CH_2-$ | $HOCH_2-C-CH_2-$ | $CH_2-$ und bei

n = 4 $CH_2-$ | $-CH_2-C-CH_2-$ | $CH_2-$

darstellt, oder Gemische der genannten Verbindungen.

Besonders bevorzugt verwendet man als Komponente (a) Äthylenglykoldimethacrylat, Butandiol--1,4-diacrylat oder -dimethacrylat, Hexandiol-1,6--diacrylat oder -dimethacrylat, 2-Hydroxyäthyl-, 2- oder 3-Hydroxypropyldiacrylat oder -dimethacrylat, 2-Metoxyäthyl- oder 2-Äthoxyäthylacrylat oder -methacrylat, 1,1,1-Trimethylolpropantriacrylat oder -trimethacrylat, Pentaerythrittriacrylat oder -trimethacrylat, oder Gemische davon.

Die Komponente (a) wird vorzugsweise in einer Menge von 4-20, besonders 4-15 Gew.-%, bezogen auf alle Komponenten (a) bis (f), eingesetzt.

Als Epoxidharze (b) (i) kommen vor allem solche mit durchschnittlich mehr als einer an ein Heteroatom, z.B. an ein S- und vorzugsweise an ein O- oder N-Atom, gebundenen Gruppen der Formel II

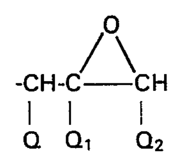
(II)

in betracht, wobei Q und $Q_2$ je ein Wasserstoffatom und $Q_1$ ein Wasserstoffatom oder eine Methylgruppe bedeuten oder Q und $Q_2$ zusammen $-CH_2CH_2-$ oder $-CH_2CH_2CH_2-$ und $Q_1$ ein Wasserstoffatom bedeuten.

Als Beispiele solcher Harze seien Polyglycidyl- und Poly(β-methylglycidyl)ester genannt, die sich von aliphatischen, cycloaliphatischen oder aromatischen Polycarbonsäuren ableiten. Beispiele geeigneter Polycarbonsäuren sind Bernsteinsäure, Glutarsäure, Adipinsäure, Pimelinsäure, Korksäure, Azelainsäure, Sebacinsäure, dimerisierte oder trimerisierte Linolsäure, Tetrahydrophthalsäure, 4-Methyltetrahydrophthalsäure, Hexahydrophthalsäure, 4-Methylhexahydrophthalsäure, Phthalsäure, Iso- und Terephthalsäure.

Weitere Beispiele sind Polyglycidyl- und Poly(β--methylglycidyl)-äther, die durch Umsetzung einer mindestens zwei alkoholische und/oder phenolische Hydroxylgruppen pro Molekül enthaltenden Verbindung mit Epichlorhydrin oder mit Allylchlorid und anschliessende Epoxidierung mit Persäuren erhalten werden.

Geeignete Polyole sind z.B. Äthylenglykol, Diäthylenglykol, Poly(oxyäthylen)glykole, Propan-1,2-diol, Poly(oxypropylen)glykole, Propan-1,3-diol, Butan--1,4-diol, Poly(oxytetramethylen)-glykole, Pentan--1,5-diol, Hexan-2,4,6-triol, Glycerin, 1,1,1-Trimethylolpropan, Pentaerythrit und Sorbit; Resorcit, Chinit, Bis-(4-hydroxycyclohexyl)-methan, 2,2-Bis-(4-hydroxycyclohexyl)propan und 1,1-Bis(hydroxymethyl)-cyclohex-3-en; N,N-Bis(2-hydroxyäthyl)anilin und 4,4'-Bis(2-hydroxyäthylamino)diphenylmethan; Resorcin, Hydrochinon, Bis-(4-hydroxyphenyl)methan (Bisphenol F), 2,2-Bis(4-hydroxyphenyl)-propan (Bisphenol A), 2,2-Bis(4-hydroxy-3,5-dibromphenyl)propan (Tetrabrombisphenol A), 1,1,2,2-Tetrakis(4-hydroxyphenyl)äthan, 4,4'-Dihydroxyphenyl, Bis-(4-hydroxyphenyl)sulfon sowie Novolake aus Formaldehyd oder Acetaldehyd und Phenol, Chlorphenol oder Alkylphenolen mit bis zu 9 C-Atomen im Alkyl, besonders Kresol- und Phenol-Novolake.

Als Poly(N-glycidyl)-Verbindungen kommen durch Dehydrochlorierung von Umsetzungsprodukten aus Epichlorhydrin und Aminen mit mindestens zwei Aminwasserstoffatomen erhaltene Produkte in betracht. Geeignete Amine sind z.B. Anilin, n-Butylamin, Bis-(4-aminophenyl)-methan, 1,3- und 1,4-Xylylendiamin, 1,3- und 1,4-Bis(aminomethyl)-cyclohexan und Bis(4-methylaminophenyl)methan. Triglycidylisocyanurat, N,N'-Diglycidylderivate von cyclischen Alkylenharnstoffen, wie Äthylenharnstoff und 1,3-Propylenharnstoff, oder Hydantoinen, wie 5,5-Dimethylhydantoin, sind weitere geeignete derartige Verbindungen.

Poly(S-glycidyl)-verbindungen sind z.B. die Di-S-Glycidylderivate von Dithiolen, wie Äthanol-1,2-dithiol und Bis-(4-mercaptomethylphenyl)-äther.

Beispiele für Epoxidharze mit einer oder mehreren Gruppen der Formel II, in welcher Q und $Q_2$ zusammen eine Gruppe $-CH_2CH_2-$ oder $-CH_2CH_2CH_2-$ bedeuten, sind Bis(2,3-epoxycyclopentyl)äther, 2,3-Epoxycyclopentylglycidyläther, 1,2-Bis(2,3-epoxycyclopentyloxy)äthan, 3,4-Epoxy-6-methylcyclohexylmethyl-3',4'-epoxy-6'-methylcyclohexancarboxylat und 2-(3,4-Epoxy)cyclohexyl-5,5-spiro-(3',4'-epoxy)cyclohexan-dioxan.

Ebenfalls einsetzbar sind Epoxidharze, in welchen die Epoxidgruppen an Heteroatome verschiedener Art gebunden sind, oder in denen einige oder sämtliche Epoxidgruppen mittelständig sind, wie beispielsweise das N,N,O-Triglycidylderivat des 4-Aminophenols, N-Glycidyl-N'-(2-glycidyloxypropyl)-5,5-dimethylhydantoin, Vinylcyclohexendioxid, Limonendioxid und Dicyclopentadiendioxid.

Die Epoxidharze (b) oder (i) können fest oder flüssig sein. Als Komponente (b) verwendet man bevorzugt flüssige Epoxidharze oder Gemische aus flüssigen und festen Epoxidharzen. Der Anteil an flüssigen Epoxidarzen in der Komponente (b) beträgt vorzugsweise mindestens 30 Gew.-% und insbesondere mindestens 50 Gew.-%, bezogen auf die Gesamtmenge der vorhandenen Harze (b). Als flüssige Epoxidharze verwendet man mit Vorteil solche mit einem Epoxidgehalt von 3,5 bis 7,0 Äquivalenten/kg, während als feste Epoxidharze solche mit einem Epoxidgehalt von 0,5 bis 2,9 Äquivalenten/kg bevorzugt sind.

Die Komponente (b) wird vorzugsweise in einer Menge von 30 bis 90 Gew.-% eingesetzt.

Besonders bevorzugt setzt man als Komponente (b) gegebenenfalls vorverlängerte Diglycidyläther von zweiwertigen Phenolen, vor allem 2,2-Bis(4-hydroxyphenyl)propan, 2,2-Bis(3,5-dibrom-4-hydroxyphenyl)propan, Bis(4-hydroxyphenyl)methan, Bis(4-hydroxycyclohexyl)methan oder 2,2-Bis(4-hydroxycyclohexyl)propan, Polyglycidyläther von Novolaken, oder tetraglycidyliertes 4,4'-Diaminodiphenylmethan ein. Ganz besonders bevorzugt sind gegebenenfalls vorverlängerte Diglycidyläther von Bisphenol A, Tetrabrom-Bisphenol A oder Bisphenol F, Polyglycidyläther von Phenol-Formaldehyd- oder Kresol-Formaldehyd-Novolaken, oder Gemische davon.

Die Epoxidharze (b) können mit einem reaktiven Verdünner, wie z.B. Phenyl- oder Kresylglycidyläther, Butandioldiglycidyläther, Hexahydrophthalsäurediglycidyläther oder Glycidylestern von synthetischen hochverzweigten, in der Hauptsache tertiären aliphatischen Monocarbonsäuren, bekannt unter der Bezeichnung «CARDURA E», gemischt sein, vorzugsweise in einer Menge von 3-50 Gew.-%, bezogen auf die Gesamtmenge der Epoxidharze.

Als hitzeaktivierbare Härter (c) können an sich bekannte Verbindungen eingesetzt werden, z.B. aromatische Polyamine mit mindestens drei Aminwasserstoffatomen pro Molekül, wie p- und m-Phenylendiamin, Bis(p-aminophenyl)methan und Bis(p-aminophenyl)äther; Polycarbonsäureanhydride, wie Phthalsäureanhydrid, Tetrahydrophthalsäureanhydrid, Hexahydrophthalsäureanhydrid, Trimellitsäureanhydrid und Pyromellitsäureanhydrid; Cyanamid, Dicyandiamid, Komplexe von Aminen, wie Äthylamin und Trimethylamin, mit Bortrifluorid und Bortrichlorid; Melamine, N,N-Diallylmelamine, Phthalimide und Polyhydrazide, wie Isophthalsäuredihydrazid, Adipin- und Sebacinsäuredihydrazid.

Bevorzugt wird als Härter Dicyandiamid verwendet. Der Härter (c) wird in einer für das Aushärten der Epoxidharze ausreichenden Menge eingesetzt. Anhydrid- und Amin-Härter werden vorzugsweise in einer solchen Menge verwendet, dass pro Äquivalent Epoxidgruppe der Epoxidharze 0,7 bis 1,2 Anhydrid- bzw. Aminwasserstoffäquivalente vorhanden sind.

Als Beschleuniger (d) kommen insbesondere Verbindungen der Formel III

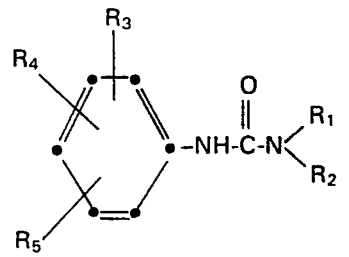

(III)

in betracht, worin $R_1$ und $R_2$ unabhängig voneinander Alkyl mit 1-4 C-Atomen, $R_3$ und $R_4$ unabhängig voneinander ein Wasserstoff- oder Halogenatom, Alkyl oder Alkoxy mit 1-4 C-Atomen, Phenyl oder Phenoxy, und $R_5$ ein Wasserstoffatom oder $-CF_3$ bedeuten. $R_1$ und $R_2$ stellen vorzugsweise je Methyl oder Äthyl dar, und $R_3$ und $R_4$ sind bevorzugt unabhängig voneinander ein Wasserstoff-, Chlor- oder Bromatom, Alkyl oder Alkoxy mit 1-4 und insbesondere 1 oder 2 C-Atomen. Als Verbindungen der Formel III kommen insbesondere N-4-Trifluormethylphenyl-N',N'-dimethylharnstoff, N-4-Chlorphenyl-N',N'-dimethylharnstoff (Monuron), N-4-Äthoxyphenyl-N',N'-dimethylharnstoff und vor allem N-3-Chlor-4-methylphenyl-N',N'-dimethylharnstoff (Chlortoluron) in betracht. Als Beschleuniger (d) eignen sich ferner Imidazole, wie Benzimidazol, 2-Äthyl-4-methylimidazol und 2-Phenylimidazol, und tertiäre Amine, wie Benzyldimethylamin und Hexamethylentetramin.

Der Beschleuniger (d) wird vorzugsweise in einer Menge von 0,1 bis 1,0 Gew.-% verwendet. Chlortoluron ist als Beschleuniger besonders bevorzugt.

Als Photopolymerisationskatalysatoren (e) kommen im Prinzip zwei Klassen von Verbindungen in Frage:

— solche, die bei Bestrahlung einen angeregten Zustand ergeben, der zur Bildung freier Radikale führt, die dann die Polymerisation der Verbindung (a) einleiten (Photoinitiatoren) und

— solche, die bei Bestrahlung einen angeregten Zustand ergeben, der seinerseits seine Anregungsenergie auf ein Monomermolekül überträgt, so dass ein angeregtes Monomermolekül entsteht, welches dann mit einem nicht angeregten Monomermolekül vernetzt (Photosensibilisatoren).

Geeignete Photopolymerisationskatalysatoren sind z.B. in der deutschen Offenlegungsschrift 2 706 549 beschrieben. Vorzugsweise verwendet man 0,02 bis 1,0 Gew.-% Photopolymerisationskatalysator, insbesondere Benzildimethylketal.

Das erfindungsgemäss zu verwendende Stoffgemisch kann weitere übliche Zusätze (f) enthalten, z.B. Pigmente oder Russ und insbesondere anorganische Füllstoffe, wie Glas, Quarzmehl, Calciumcarbonat, Wollastonit, Dolomit, Kaolin, Talk und dergleichen, oberflächenaktive Stoffe oder Elastomere, vor allem Acrylnitril-Butadien-Elastomere.

Der Anteil an weiteren Zusätzen (f) kann bis zu 65 Gew.-%, bezogen auf die Gesamtheit der Komponenten (a) bis (f), betragen. Anorganische Füllstoffe, besonders Calciumcarbonat und Wollastonit, werden zweckmässig in Mengen von 10-60 Gew.-% verwendet. Dadurch lässt sich der Anteil der übrigen Komponenten, insbesondere der Harze (b) und vor allem der festen Epoxidharze, entsprechend reduzieren.

Das Beschichten der Trennfolien kann bei relativ tiefen Temperaturen, zweckmässig bei Temperaturen zwischen 50° und 70°C, vorgenommen werden. Geeignete Verstärkungsmaterialien sind z.B. Glasfaser-, Baumwoll- und insbesondere Polyester-Vliese.

Als abziehbare Trennfolien bzw. Unterlagen können im erfindungsgemässen Verfahren übliche Materialien verwendet werden, z.B. Trennfolien aus Polyäthylen oder Polyester oder aus cellulosehaltigem Papier mit einer Silikonbeschichtung (sog. Silikonpapiere).

Für die Photopolymerisation verwendet man vorzugsweise aktinische Strahlung einer Wellenlänge von 200-600 nm, besonders UV-Bestrahlung. Als aktinische Strahlungsquellen eignen sich unter anderem Kohlelichtbögen, Quecksilberdampflampen, Metallhalogeniddampflampen, Leuchtröhren mit ultraviolettes Licht ausstrahlenden Leuchtstoffen, Argon- und Xenonglimmlampen, Wolframlampen und photographische Flutlampen. Die zur Belichtung der photopolymerisierbaren Verbindungen benötigte Zeit kann in Abhängigkeit von der Art und Menge der verwendeten Komponenten (a) bis (f), der Art der Lichtquelle und deren Abstand von der beschichteten Trennfolie variieren. Nach der Photopolymerisation muss die Beschichtung auf jeden Fall noch heisshärtbar sein; aus diesem Grund erfolgt die Photopolymerisation bei Temperaturen unterhalb derjenigen, bei der die Heisshärtung in Gegenwart des hitzeaktivierbaren Härters durchgeführt wird.

Geeignete Komponenten (i), (ii) und (iii) für das allfällige Auftragen einer zusätzlichen heisshärtbaren Klebeschicht, einschliess bevorzugter Ausführungsformen, sind in der US-PS 3 641 195 beschrieben. Der relevante Inhalt dieser Patentschrift ist somit Bestandteil der vorliegenden Erfindung.

Die erfindungsgemäss erhaltenen Klebefolien eignen sich zum Verkleben verschiedener Substrate, wie Glas, Keramik, Porzellan, Kunststoffen, Holz und Metallen, besonders zum Verkleben von öligen und nicht öligen Metallsubstraten, z.B. solchen aus Aluminium, Kupfer oder Stahl.

Das Verkleben (Heisshärten) erfolgt im allgemeinen bei Temperaturen zwischen 70° und 200°C, besonders 120° bis 180°C.

Das erfindungsgemässe Verfahren wird durch die folgenden Beispiele illustriert. Als Harze (b) werden verwendet:

*Flüssige Epoxidharze*

Harz I: flüssiges Epoxidharz auf der Basis von Bisphenol A und Epichlorhydrin mit einem Epoxidgehalt von 5,35 Äquivalenten/kg.

Harz II: flüssiges Epoxidharz auf der Basis von Bisphenol A und Epichlorhydrin mit einem Epoxidgehalt von 4,6 Äquivalenten/kg.

Harz III: flüssiges Epoxid-Phenol-Novolak-Harz mit einem Epoxidgehalt von 5,4 Äquivalenten/kg.

*Feste Epoxidharze*

Harz A: festes vorverlängertes Epoxidharz auf der Basis von Bisphenol A und Epichlorhydrin mit einem Epoxidgehalt von 2,45-2,85 Äquivalenten/kg.

Harz B: festes vorverlängertes Epoxidharz auf der Basis von Bisphenol A und Epichlorhydrin mit einem Epoxidgehalt von 0,38 Äquivalenten/kg.

Harz C: festes vorverlängertes Epoxidharz auf der Basis von Bisphenol A und Epichlorhydrin mit einem Epoxidgehalt von 0,45 Äquivalenten/kg.

Harz D: festes vorverlängertes Epoxidharz auf der Basis von Bisphenol A und Epichlorhydrin mit einem Epoxidgehalt von 0,55 Äquivalenten/kg.

*Beispiele 1-21:*

Die Komponenten (b) sowie gegebenenfalls vorhandene weitere Zusätze (Flüssigpolymer, Füllstoffe oder oberflächenaktives Mittel) werden in einem Mischgefäss bei 150-170°C homogenisiert. Das erhaltene Gemisch wird auf 80°C abgekühlt und mit dem Härter (c) vermischt. Nach weiterem Abkühlen

auf 60°C werden die Komponenten (a) (Acrylat), der Beschleuniger (d) und der Photopolymerisationskatalysator (e) zugegeben. Nach 10 Minuten Rühren entsteht eine homogene Emulsion.

Das so erhaltene Gemisch wird auf 60°C gehalten und auf ein Silikonpapier (100 × 10 mm) aufgetragen (Schichtdicke ca. 0,15 mm). Anschliessend wird ein Polyester-Vlies (Schichtdicke 0,1 mm) auf die Schicht gelegt und 1 Minute bei 60°C gehalten, wobei das Vlies in die Schicht eindringt. Dann wird eine weitere Schicht des obigen Gemisches aufgetragen (Schichtdicke ca. 0,15 mm). Der erhaltene Film wird während 3 Minuten mit einer Metallhalogenid-Kopierlampe («Ultralux 5000 K» der Fa. W. Staub, Neu-Isenburg, BRD) belichtet.

Zur Bestimmung der Zugscherfestigkeit werden die Filme auf ölige Stahlbleche appliziert und während 30 Minuten bei 180°C ausgehärtet. Die Zusammensetzungen und Eigenschaften der erhaltenen Klebefilme sind in der folgenden Tabelle I zusammengefasst. Die Mengen sind in Gew.-% angegeben.

*Beispiel 22-29:*

Das Verfahren gemäss den Beispielen 1-21 wird wiederholt, jedoch ohne Mitverwendung eines Polyester-Vlieses. Es erfolgt demnach nur eine einmalige Beschichtung (Schichtdicke ca. 0,15 mm). Die Prüfung der Klebrigkeit und der Zugscherfestigkeit erfolgt wie in den Beispielen 1-21 beschrieben.

Die Zusammensetzungen und Eigenschaften der erhaltenen Klebefilme sind in der folgenden Tabelle I zusammengefasst. Die Mengen sind in Gew.-% angegeben.

*Beispiele 30-45*

Die gemäss den Beispielen 1-8 erhaltenen Klebefilme werden mit einer trockenen bzw. klebrigen Schicht versehen (Schichtdicke 0,1-0,6 mm). Für die Herstellung dieser oberen Schicht werden die folgenden Zusamensetzungen verwendet:

*Beispiele 30-37:* (trockene obere Schicht)

| | |
|---|---|
| Harz I | 35,93 Gew.-% |
| Harz A | 25,12 Gew.-% |
| Dicyandiamid | 3,05 Gew.-% |
| Chlortoluron | 0,36 Gew.-% |
| Calciumcarbonat | 20,55 Gew.-% |
| blaues Pigment | 0,15 Gew.-% |
| Äthylen-Vinylacetat-Elastomer (Elvax P 40® der Firma Du-Pont) | 12,56 Gew.-% |
| Haftvermittler (γ-Glycidyloxy-propyl-trimethoxysilan) | 1,02 Gew.-% |
| Thixotropiermittel (Silodex 24® der Firma Grace) | 1,26 Gew.-% |

*Beispiele 38-45:* (klebrige obere Schicht)

| | |
|---|---|
| Harz I | 51,99 Gew.-% |
| Harz A | 27,05 Gew.-% |
| Dicyandiamid | 4,16 Gew.-% |
| Chlortoluron | 0,53 Gew.-% |
| Calciumcarbonat | 5,30 Gew.-% |
| blaues Pigment | 0,36 Gew.-% |
| Äthylen-Vinylacetat-Elastomer (Elvax P 40® ) | 8,21 Gew.-% |
| Haftvermittler (γ-Glycidyloxy-propyl-trimethoxysilan) | 0,74 Gew.-% |
| Thixotropiermittel (Silodex 24® ) | 1,66 Gew.-% |

Die Eigenschaften der erhaltenen Klebefilme sind in der folgenden Tabelle I zusammengefasst.

TABELLE I

| Komponenten | Beispiel Nr. 1 | 2 | 3 | 4 | 5 | 6 | 7 | 8 | 9 |
|---|---|---|---|---|---|---|---|---|---|
| (a) Butandiol-1,4-dimethacrylat | 6,31 | 11,88 | 16,82 | 21,22 | 4,97 | 9,51 | 13,61 | 6,45 | 4,20 |
| Hexandiol-1,6-diacrylat | | | | | | | | | |
| 2-Hydroxyäthyl-methacrylat | | | | | | | | | |
| 1,1,1-Trimethylol-propantrimeth-acrylat | | | | | | | | | |
| Methacrylsäure-2-äthoxyäthylester | | | | | | | | | |
| (b) Harz I | 56,84 | 53,44 | 50,41 | 47,70 | 44,97 | 42,80 | 40,83 | 25,39 | 36,14 |
| Harz II | | | | | | | | | |
| Harz III | | | | | | | | | |
| Harz A | | | | | 30,89 | 29,40 | 28,05 | 44,74 | 24,90 |
| Harz B | | | | | | | | | |
| Harz C | | | | | | | | | |
| Harz D | 31,53 | 29,63 | 27,96 | 26,46 | 13,95 | 13,28 | 12,67 | | 11,24 |
| (c) Dicyandiamid | 4,81 | 4,52 | 4,26 | 4,04 | 4,69 | 4,46 | 4,26 | 3,23 | 3,94 |
| Trimellitsäure-anhydrid | | | | | | | | | |
| (d) Chlortoluron [2)] | 0,44 | 0,41 | 0,39 | 0,37 | 0,48 | 0,46 | 0,44 | 0,43 | 0,45 |
| Benzimidazol | | | | | | | | | |
| (e) Benzildimethylketal | 0,07 | 0,12 | 0,16 | 0,21 | 0,05 | 0,09 | 0,14 | 0,06 | 0,04 |
| (f) Calciumcarbonat [1)] | | | | | | | | | 19,09 |
| Wollastonit | | | | | | | | | |
| Flüssigpolymer [5)] | | | | | | | | 16,13 | |
| d-Limonen [6)] | | | | | | | | 3,57 | |
| Aspekt der Filme nach 3 Min/UV | | | | | | | | | |
| oben [3)] | + | + | + | + | + | + | + | + | + |
| unten [4)] | w. + | — | — | — | + | w. + | w. + | + | + |
| Zugscherfestigkeit in $N/mm^2$ | 10 | 16 | 14 | 13 | 16 | n.b. | n.b. | 24,0 | 16,0 |

TABELLE I (Fortsetzung)

| Komponenten | Beispiel Nr. 10 | 11 | 12 | 13 | 14 | 15 | 16 | 17 | 18 |
|---|---|---|---|---|---|---|---|---|---|
| (a) Butandiol-1,4-dimethacrylat | 7,65 | 11,99 | 2,05 | 5,56 | 11,80 | 11,98 | | | |
| Hexandiol-1,6-diacrylat | | | | | | | 13 | 13 | 13 |
| 2-Hydroxyäthyl-methacrylat | | | | | 11,80 | | | | |
| 1,1,1-Trimethylol-propantrimeth-acrylat | | | | | | | | | |
| Methacrylsäure-2-äthoxyäthylester | | | | | | 11,97 | | | |
| (b) Harz I | 27,91 | 18,05 | 31,64 | 28,67 | 36,09 | 35,90 | | | |
| Harz II | | | | | | | 56,77 | | |
| Harz III | | | | | | | | 54,22 | |
| Harz A | 19,24 | 12,44 | | | 24,69 | 24,66 | | | 74,81 |
| Harz B | | | | | | | 11 | | |
| Harz C | | | | | | | | 10,84 | |
| Harz D | 8,68 | 5,61 | | | 11,15 | 11,14 | | | |
| (c) Dicyandiamid | 3,04 | 1,97 | 5,58 | 5,06 | 3,75 | 3,74 | | | |
| Trimellitsäure-anhydrid | | | | | | | 19 | 21,70 | 11,87 |
| (d) Chlortoluron | 0,35 | 0,23 | 0,71 | 0,65 | 0,48 | 0,38 | | | |
| Benzimidazol | | | | | | | 0,1 | 0,11 | 0,19 |
| (e) Benzildimethylketal | 0,07 | 0,12 | 0,02 | 0,06 | 0,24 | 0,23 | 0,13 | 0,13 | 0,13 |
| (f) Calciumcarbonat | 33,06 | 49,59 | 60,00 | 60,00 | | | | | |
| Wollastonit | | | | | | | | | |
| Flüssigpolymer | | | | | | | | | |
| d-Limonen | | | | | | | | | |
| Aspekt der Filme nach 3 Min/UV | | | | | | | | | |
| oben | + | + | + | + | + | + | + | + | + |
| unten | w. + | — | — | — | — | — | w. + | — | — |
| Zugscherfestigkeit in $N/mm^2$ | 14,0 | 9,0 | n.b. | n.b. | n.b. | n.b. | 11 | 13 | 8 |

TABELLE I (Fortsetzung)

| Komponenten | Beispiel Nr. 19 | 20 | 21 | 22 | 23 | 24 | 25 | 26 | 27 |
|---|---|---|---|---|---|---|---|---|---|
| (a) Butandiol-1,4-dimethacrylat | | | | 6,31 | 11,88 | 16,82 | 21,22 | 4,97 | 9,51 |
| Hexandiol-1,6-diacrylat | 13,02 | 11,42 | 9,87 | | | | | | |
| 2-Hydroxyäthyl-methacrylat | | | | | | | | | |
| 1,1,1-Trimethylol-propantrimeth-acrylat | | | | | | | | | |
| Methacrylsäure-2-äthoxyäthylester | | | | | | | | | |
| (b) Harz I | | | | 56,84 | 53,44 | 50,41 | 47,70 | 44,97 | 42,80 |
| Harz II | | | | | | | | | |
| Harz III | 60,90 | 63,23 | 54,60 | | | | | | |
| Harz A | 13,48 | | | | | | | 30,89 | 29,40 |
| Harz B | | | | | | | | | |
| Harz C | | | | | | | | | |
| Harz D | | | | 31,53 | 29,63 | 27,96 | 26,46 | 13,95 | 13,28 |
| (c) Dicyandiamid | | | | 4,81 | 4,52 | 4,26 | 4,04 | 4,69 | 4,46 |
| Trimellitsäure-anhydrid | | | | | | | | | |
| (d) Chlortoluron | | | | 0,44 | 0,41 | 0,39 | 0,37 | 0,48 | 0,46 |
| Benzimidazol | | | | | | | | | |
| (e) Benzildimethylketal | 0,13 | 0,11 | 0,09 | 0,07 | 0,12 | 0,16 | 0,21 | 0,05 | 0,09 |
| (f) Calciumcarbonat | | | | | | | | | |
| Wollastonit | | 12,32 | 24,24 | | | | | | |
| Flüssigpolymer | | | | | | | | | |
| d-Limonen | | | | | | | | | |
| Mischung aus Harz I + Dicyandiamid (1:1) | 10,92 | 11,32 | 9,80 | | | | | | |
| Mischung aus Harz I + Chortoluron (6:4) | 1,55 | 1,60 | 1,40 | | | | | | |
| Aspekt der Filme nach 3 Min/UV | | | | | | | | | |
| oben | + | + | + | + | + | + | + | + | + |
| unten | w. + | w. + | w. + | + | + | w. + | — | + | w. + |
| Zugscherfestigkeit in N/mm² | 13 | 14 | 13 | 16 | 15 | 14 | 13 | 16 | n.b. |

TABELLE I (Fortsetzung)

| Komponenten | Beispiel Nr. | | | | | | | | |
|---|---|---|---|---|---|---|---|---|---|
| | 28 | 29 | 30 | 31 | 32 | 33 | 34 | 35 | 36 |
| (a) Butandiol-1,4-dimethacrylat | 13,61 | 6,45 | 6,31 | 11,88 | 16,82 | 21,22 | 4,97 | 9,51 | 13,61 |
| Hexandiol-1,6-diacrylat | | | | | | | | | |
| 2-Hydroxyäthyl-methacrylat | | | | | | | | | |
| 1,1,1-Trimethylol-propantrimeth-acrylat | | | | | | | | | |
| Methacrylsäure-2-äthoxyäthylester | | | | | | | | | |
| (b) Harz I | 40,83 | 25,39 | 56,84 | 53,44 | 50,41 | 47,70 | 44,97 | 42,80 | 40,83 |
| Harz II | | | | | | | | | |
| Harz III | | | | | | | | | |
| Harz A | 28,05 | 44,74 | | | | | 30,89 | 29,40 | 28,05 |
| Harz B | | | | | | | | | |
| Harz C | | | | | | | | | |
| Harz D | 12,67 | | 31,53 | 29,63 | 27,96 | 26,46 | 13,95 | 13,28 | 12,67 |
| (c) Dicyandiamid | 4,26 | 3,23 | 4,81 | 4,52 | 4,26 | 4,04 | 4,69 | 4,46 | 4,26 |
| Trimellitsäure-anhydrid | | | | | | | | | |
| (d) Chlortoluron | 0,44 | 0,43 | 0,44 | 0,41 | 0,39 | 0,37 | 0,48 | 0,46 | 0,44 |
| Benzimidazol | | | | | | | | | |
| (e) Benzildimethylketal | 0,14 | 0,06 | 0,07 | 0,12 | 0,16 | 0,21 | 0,05 | 0,09 | 0,14 |
| (f) Calciumcarbonat | | | | | | | | | |
| Wollastonit | | | | | | | | | |
| Flüssigpolymer | | 16,13 | | | | | | | |
| d-Limonen | | 3,57 | | | | | | | |
| Aspekt der Filme nach 3 Min/UV | | | | | | | | | |
| oben | + | + | — | — | — | — | — | — | — |
| unten | w. + | + | + | + | w. + | — | + | w. + | w. + |
| Zugscherfestigkeit in $N/mm^2$ | n.b. | 24,0 | 17 | 16 | 16 | 16 | 16 | n.b. | n.b. |

TABELLE I (Fortsetzung)

| Komponenten | Beispiel Nr. | | | | | | | | |
|---|---|---|---|---|---|---|---|---|---|
| | 37 | 38 | 39 | 40 | 41 | 42 | 43 | 44 | 45 |
| (a) Butandiol-1,4-dimethacrylat | 6,45 | 6,31 | 11,88 | 16,82 | 21,22 | 4,97 | 9,51 | 13,61 | 6,45 |
| Hexandiol-1,6-diacrylat | | | | | | | | | |
| 2-Hydroxyäthylmethacrylat | | | | | | | | | |
| 1,1,1-Trimethylolpropantrimethacrylat | | | | | | | | | |
| Methacrylsäure-2-äthoxyäthylester | | | | | | | | | |
| (b) Harz I | 25,39 | 56,84 | 53,44 | 50,41 | 47,70 | 44,97 | 42,80 | 40,83 | 25,39 |
| Harz II | | | | | | | | | |
| Harz III | | | | | | | | | |
| Harz A | 44,74 | | | | | 30,89 | 29,40 | 28,05 | 44,74 |
| Harz B | | | | | | | | | |
| Harz C | | | | | | | | | |
| Harz D | | 31,53 | 29,63 | 27,96 | 26,46 | 13,95 | 13,28 | 12,67 | |
| (c) Dicyandiamid | 3,23 | 4,81 | 4,52 | 4,26 | 4,04 | 4,69 | 4,46 | 4,26 | 3,23 |
| Trimellitsäure-anhydrid | | | | | | | | | |
| (d) Chlortoluron | 0,43 | 0,44 | 0,41 | 0,39 | 0,37 | 0,48 | 0,46 | 0,44 | 0,43 |
| Benzimidazol | | | | | | | | | |
| (e) Benzildimethylketal | 0,06 | 0,07 | 0,12 | 0,16 | 0,21 | 0,05 | 0,09 | 0,14 | 0,06 |
| (f) Calciumcarbonat | | | | | | | | | |
| Wollastonit | | | | | | | | | |
| Flüssigpolymer | 16,13 | | | | | | | | 16,13 |
| d-Limonen | 3,57 | | | | | | | | 3,57 |
| Aspekt der Filme nach 3 Min/UV | | | | | | | | | |
| oben | — | + | + | + | + | + | + | + | + |
| unten | + | + | + | w.+ | — | + | w.+ | w.+ | + |
| Zugscherfestigkeit in $N/mm^2$ | 16,0 | 17 | 17 | 15 | 14 | 17 | n.b. | n.b. | 22,0 |

[1] «Durcal S» der Fa. Plüss + Staufer AG.

[2] =
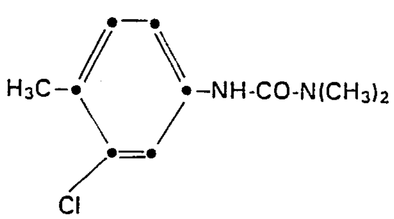

[3] [4] + = klebrig, w.+ = weniger klebrig
— = trocken,

[5] = Acrylnitril-Butadien-Copolymer «HYCAR CTBN» der Fa. B.F. Goodrich Co.

[6] = oberflächenaktives Mittel

n.b. = nicht bestimmt.

Die erfindungsgemäss zu verwendenden Formulierungen zeigen eine sehr *gute Kalt-warm-Feuchtigkeitsbeständigkeit.* Zugscherfestigkeitsproben aus öligem Stahl werden mit den Formulierungen gemäss Beispielen 1-5 verklebt, gehärtet und einem Zyklus, bestehend aus

7 Tagen bei 80°C und 100% relativer Feuchtigkeit (Dampfbad)
1 Tag bei —40°C

ausgesetzt. Es werden die Zugscherfestigkeitswerte (ZSF-Werte) vor und nach dem Zyklus ausgewertet:

ZSF (Ausgangswert) : 13-17 $N/mm^2$
nach 8 Tagen Zyklus : 10-13 $N/mm^2$.

Die *Klebrigkeit der Filme* ist wenig temperaturabhängig. Speziell bei tiefen Temperaturen (z.B. bei 10°C) verlieren beispielsweise die Formulierungen gemäss Beispielen 1-3 ihre Klebrigkeit nicht (s. Tabelle II).

TABELLE II

| Schlagtest auf öligem Stahl | | Beispiel Nr. 1 | 2 | 3 |
|---|---|---|---|---|
| bei 20°C Filmseite | oben | + | + | + |
| | unten | + | + | — |
| bei 10°C Filmseite | oben | + | + | + |
| | unten | + | — | — |

Beurteilung der Filme: + = klebrig
— = trocken.

Es zeigt sich ferner, dass die Klebrigkeit auch nach Lagerung nicht verloren geht. Die Klebrigkeit wird mit Hilfe des Schlagtests bestimmt: der Klebefilm (100 × 10 mm) wird bei verschiedenen Temperaturen (10°C, 20°C) gelagert, dann bei diesen Temperaturen mit leichtem Fingerdruck auf ein öliges Stahlblech appliziert und nachher auf eine harte Unterlage (Schmiedeisen) geklopft. Der Film sollte bei dem Klopfen nicht wegrutschen.

**Patentansprüche**

1. Verfahren zur Herstellung von heisshärtbaren Klebefilmen mit unterschiedlicher Klebrigkeit auf beiden Seiten, dadurch gekennzeichnet, dass man

1) eine abziehbare Trennfolie oder Unterlage mit einem flüssigen Stoffgemisch, enthaltend

(a) 2-24 Gew.-% einer photopolymerisierbaren Verbindung mit mindestens einer Gruppierung $CH_2=C(R)COO-$, worin R ein Wasserstoffatom oder eine Methylgruppe bedeutet,

(b) 20-90 Gew.-% eines keine photopolymerisierbaren Gruppen aufweisenden heisshärtbaren Epoxidharzes oder Epoxidharzgemisches,

(c) einen hitzeaktivierbaren Härter für Epoxidharze,

(d) 0,1 bis 2 Gew.-% eines Beschleunigers und

(e) 0,01 bis 5 Gew.-% eines Photopolymerisationskatalysators für die Komponente (a)

beschichtet, wobei sich die Komponenten (a) bis (e) auf 100 Gew.-% ergänzen,

2) die Schicht gegebenenfalls mit einem Verstärkungsmaterial abdeckt und erneut mit einem Stoffgemisch gemäss 1) beschichtet, und

3) die so erhaltene Schicht mit aktinischem Licht bestrahlt.

2. Verfahren nach Anspruch 1, dadurch gekennzeichnet, dass man als Komponente (a) Verbindungen der Formel I

$$[CH_2=C(R)COO]_n\!-\!X \quad (I)$$

verwendet, worin R ein Wasserstoffatom oder eine Methylgruppe, n eine ganze Zahl von 1-4 und X bei n = 1 Alkyl mit 1-12 C-Atomen, Hydroxyalkyl mit 1-4 C-Atomen, Alkoxyalkyl mit 2-8 C-Atomen, 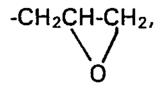 Cyclopentyl, Cyclohexyl, Phenyl, 2-Furyl, 2- oder 3-Pyridyl, bei n = 2 eine Gruppe $-C_rH_{2r}-$ mit r = 2-12, $-[CH_2CH_2O]_mCH_2CH_2-$ mit m = 1, 2 oder 3 oder

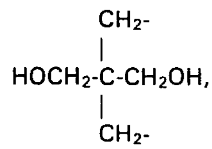

bei n = 3

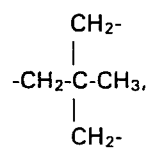 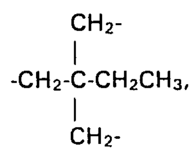 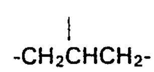

oder 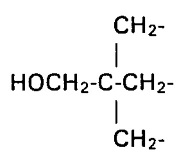

und bei n = 4 eine Gruppe

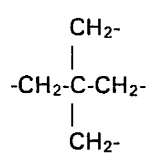 oder 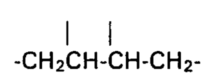

bedeuten.

3. Verfahren nach Anspruch 2, dadurch gekennzeichnet, dass man eine Verbindung der Formel I, worin R ein Wasserstoffatom oder eine Methylgruppe bedeutet, n eine ganze Zahl von 1-4 ist und X bei n = 1 Hydroxylalkyl mit 2 oder 3 C-Atomen oder Alkoxyalkyl mit 2-6 C-Atomen, bei n = 2 eine Gruppe $-(CH_2)_r-$ mit r = 2-6 oder $-CH_2CH_2OCH_2CH_2-$ oder

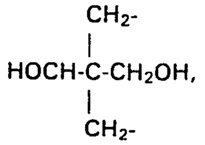

bei n = 3

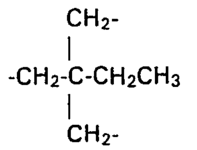 oder 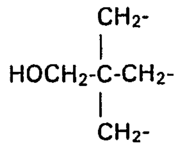 und bei

n = 4 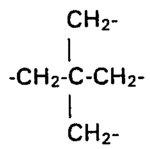

bedeutet, oder Gemische der genannten Verbindungen verwendet.

4. Verfahren nach Anspruch 1, dadurch gekennzeichnet, dass man als Komponente (a) Äthylenglykoldimethacrylat, Butandiol-1,4-diacrylat oder -dimethacrylat, Hexandiol-1,6-diacrylat oder -dimethacrylat, 2-Hydroxyäthyl-, 2- oder 3-Hydroxypropyldiacrylat oder -dimethacrylat, 2-Methoxyäthyl- oder 2-Äthoxyäthylacrylat oder -dimethacrylat, 1,1,1-Trimethylolpropantriacrylat oder -trimethacrylat, Pentaerythrittriacrylat oder -trimethacrylat oder Gemische davon verwendet.

5. Verfahren nach Anspruch 1, dadurch gekennzeichnet, dass man als Komponente (b) Epoxidharze mit durchschnittlich mehr als einer an ein S-, O- oder N-Atom gebundenen Gruppe der Formel II

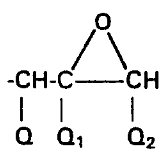 (II)

verwendet, worin Q und $Q_2$ je ein Wasserstoffatom und $Q_1$ ein Wasserstoffatom oder eine Methylgruppe bedeuten oder Q und $Q_2$ zusammen $-CH_2CH_2-$ oder $-CH_2CH_2CH_2-$ und $Q_1$ ein Wasserstoffatom darstellen.

6. Verfahren nach Anspruch 1, dadurch gekennzeichnet, dass man als Komponente (b) gegebenenfalls vorverlängerte Diglycidyläther von 2,2-Bis(4-hydroxyphenyl)propan, 2,2-Bis(3,5-dibrom-4-hydroxyphenyl)-propan, Bis(4-hydroxyphenyl)methan, Bis(4-hydroxycyclohexyl)methan oder 2,2-Bis(4-hydroxycyclohexyl)propan, Polyglycidyläther von Novolaken oder tetraglycidyliertes 4,4'-Diaminodiphenylmethan verwendet.

7. Verfahren nach Anspruch 1, dadurch gekennzeichnet, dass man als Komponente (b) gegebenenfalls vorverlängerte Diglycidyläther von Bisphenol A, Tetrabrombisphenol A oder Bisphenol F, Polyglycidyläther von Phenol-Formaldehyd- oder Kresol-Formaldehyd-Novolaken oder Gemische davon verwendet.

8. Verfahren nach Anspruch 1, dadurch gekennzeichnet, dass man als Härter (c) Dicyandiamid verwendet.

9. Verfahren nach Anspruch 1, dadurch gekennzeichnet, dass man als Beschleuniger (d) eine Verbindung der Formel III

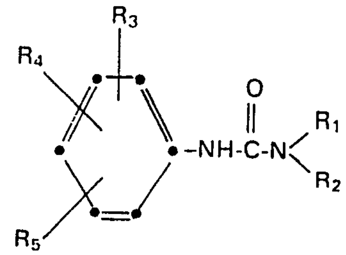 (III)

verwendet, worin $R_1$ und $R_2$ unabhängig voneinander Alkyl mit 1-4 C-Atomen, $R_3$ und $R_4$ unabhängig voneinander ein Wasserstoff- oder Halogenatom, Alkyl oder Alkoxy mit 1-4 C-Atomen, Phenyl oder Phenoxy und $R_5$ ein Wasserstoffatom oder $-CF_3$ bedeuten.

10. Verfahren nach Anspruch 1, dadurch gekennzeichnet, dass man als Beschleuniger (d) Chlortoluron verwendet.

11. Verfahren nach Anspruch 1, dadurch gekennzeichnet, dass man als Photopolymerisations-Katalysator (e) Benzildimethylketal verwendet.

12. Verfahren nach Anspruch 1, dadurch gekennzeichnet, dass man anorganische Füllstoffe, oberflächenaktive Stoffe oder Elastomere als weitere Zusätze (f) verwendet, wobei sich die Komponenten (a) bis (f) auf 100 Gew.-% ergänzen.

13. Verfahren nach Anspruch 1 oder 12, dadurch gekennzeichnet, dass man ein Stoffgemisch verwendet, das 4-20 Gew.-% Komponente (a), 30-90 Gew.-% Komponente (b), 0,1-1,0 Gew.-% Komponente (d) und 0,02-1,0 Gew.-% Komponente (e) enthält.

14. Verfahren nach Anspruch 1, dadurch gekennzeichnet, dass man die erhaltenen Klebefilme mit einem heisshärtbaren Epoxidharz-System beschichtet, das

(i) ein Epoxidharz oder Epoxidharzgemisch, das in feinteiliger Form in

(ii) einem thermoplastischen Copolymer aus einem α-Olefin und einem Äther oder Ester eines α-Olefins dispergiert ist, und

(iii) einen Härter für das Epoxidharz (i)

enthält.

15. Verwendung der gemäss Anspruch 1 oder 14 erhaltenen Klebefilme zum Verkleben von Substraten.

**Claims**

1. A process for the preparation of heat-curable adhesive films of a different adhesiveness on each side, which comprises

1) coating a peelable release film or substrate with a liquid mixture containing

(a) 2-24% by weight of a photopolymerisable compound containing at least one grouping $CH_2=C(R)COO-$ in which R is a hydrogen atom or a methyl group,

(b) 20-90% by weight of a heat-curable epoxy resin or a mixture of epoxy resins containing no photopolymerisable groups,

(c) a heat-activatable curing agent for epoxy resins,

(d) 0.1 to 2% by weight of an accelerator,

(e) 0.01 to 5% by weight of a photopolymerisation catalyst for the component (a),

the sum of the components (a) to (e) being 100% by weight,

2) covering the layer, if appropriate, with a reinforcing material and coating it again with a mixture according to 1), and

3) irradiating the layer thus obtained with actinic light.

2. A process according to claim 1, wherein component (a) is a compound of the formula I

$$[CH_2=C(R)COO]_n-X \qquad (I)$$

in which R is a hydrogen atom or a methyl group, n is an integer from 1 to 4 and, if n is 1, X is alkyl having 1-12 C atoms, hydroxyalkyl having 1-4 C atoms, alkoxyalkyl having 2-8 C atoms, 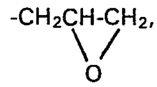

cyclopentyl, cyclohexyl, phenyl, 2-furyl, 2-pyridyl or 3-pyridyl, or, if n is 2, X is a group $-C_rH_{2r}-$ in which r is 2-12, $-[CH_2CH_2O]_mCH_2CH_2-$ in which m is 1, 2 or 3 or

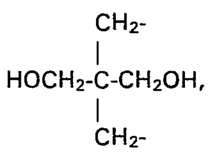

if n is 3, X is

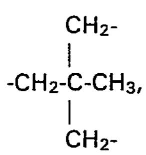 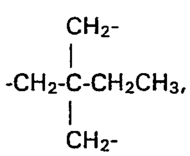 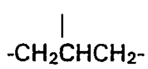

or 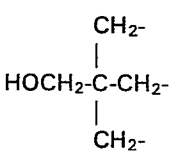

and, if n is 4, X is a group

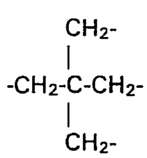 or 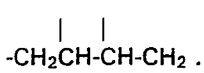

3. A process according to claim 2, wherein component (a) is a compound of the formula I in which R is a hydrogen atom or a methyl group, n is an integer from 1 to 4 and, if n is 1, X is hydroxyalkyl having 2 or 3 C atoms or alkoxyalkyl having 2-6 C atoms, if n is 2, X is a group $-(CH_2)_r-$ in which r is 2-6 or $-CH_2CH_2OCH_2CH_2-$ or

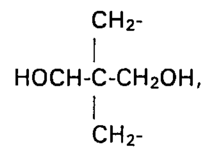

if n is 3, X is

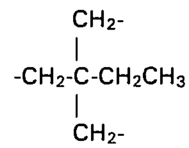 or 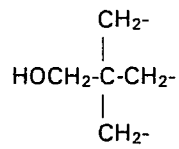

and, if n is 4, X is

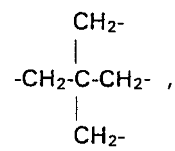

or a mixture of the said compounds.

4. A process according to claim 1, wherein component (a) is ethylene glycol dimethacrylate, 1,4-butanediol diacrylate or 1,4-butanediol dimethacrylate, 1,6-hexanediol diacrylate or 1,6-hexanediol dimethacrylate, 2-hydroxyethyl diacrylate, 2-hydroxyethyl dimethacrylate, 2-hydroxypropyl diacrylate, 2-hydroxypropyl dimethacrylate, 3-hydroxypropyl diacrylate or 3-hydroxypropyl dimethacrylate, 2-methoxyethyl acrylate, 2-methoxyethyl dimethacrylate, 2-ethoxyethyl acrylate or 2-ethoxyethyl dimethacrylate, 1,1,1-trimethylolpropane triacrylate or 1,1,1-trimethylolpropane trimethacrylate, pentaerythritol triacrylate or pentaerythritol trimethacrylate, or a mixture thereof.

5. A process according to claim 1, wherein component (b) is an epoxide resin having on average more than one group of the formula

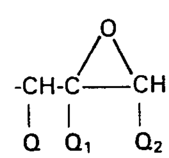 (II)

attached to an S, O or N atom, in which Q and $Q_2$ are each a hydrogen atom and $Q_1$ is a hydrogen atom or a methyl group, or Q and $Q_2$ together are $-CH_2-CH_2-$ or $CH_2-CH_2CH_2-$ and $Q_1$ is a hydrogen atom.

6. A process according to claim 1, wherein component (b) is a diglycidyl ether or an advanced diglycidyl ether of 2,2-bis(4-hydroxyphenyl)propane, 2,2-bis(3,5-dibromo-4-hydroxyphenyl)propane, bis(4-hydroxyphenyl)methane, bis(4-hy-

droxycyclohexyl)methane or 2,2-bis(4-hydroxycyclohexyl)propane, a polyglycidyl ether of a novolak, or tetraglycidylated 4,4'-diaminodiphenylmethane.

7. A process according to claim 1, wherein component (b) is a diglycidyl ether or an advanced diglycidyl ether of bisphenol A, tetrabromobisphenol A or bisphenol F, a polyglycidyl ether of a phenolformaldehyde or cresol-formaldehyde novolak, or a mixture thereof.

8. A process according to claim 1, wherein the curing agent (c) is dicyandiamide.

9. A process according to claim 1, wherein the accelerator (d) is a compound of the formula III

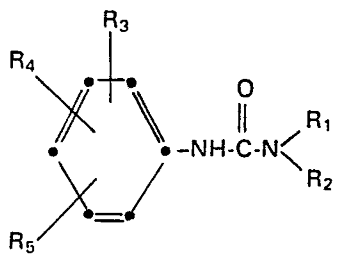

(III)

in which $R_1$ and $R_2$, independently of each other, are alkyl having 1-4 C atoms, $R_3$ and $R_4$, independently of each other, are a hydrogen or halogen atom, alkyl or alkoxy having 1-4 C atoms, phenyl or phenoxy and $R_5$ is a hydrogen atom or $-CF_3$.

10. A process according to claim 1, wherein the accelerator (d) is chlortoluron.

11. A process according to claim 1, wherein the photopolymerisation catalyst (e) is benzil dimethyl ketal.

12. A process according to claim 1, which comprises the use of inorganic fillers, surface-active substances or elastomers as further additives (f), the sum of the components (a) to (f) being 100% by weight.

13. A process according to either of claims 1 or 12, which comprises the use of a mixture containing 4-20% by weight of component (a), 30-90% by weight of component (b), 0.1-1.0% by weight of component (d) and 0.02-1.0% by weight of component (e).

14. A process according to claim 1, wherein the adhesive films obtained are coated with a heat-curable epoxy resin system containing

(i) an epoxy resin or mixture of epoxy resins which is dispersed, in a finely particulate form, in

(ii) a thermoplastic copolymer formed from an α-olefine and an ether or ester of an α-olefine, and

(iii) a curing agent for the epoxy resin (i).

15. Use of the adhesive films obtained in accordance with either of claims 1 or 14 for bonding substrates,

**Revendications**

1. Procédé de fabrication de pellicules adhésives ayant des adhésivités différentes sur leurs deux faces, procédé caractérisé en ce que:

1) on enduit un support ou une feuille séparatrice retirable avec un mélange liquide qui contient:

(a) de 2 à 24% en poids d'un composé photopolymérisable renfermant au moins un radical $CH_2=C(R)COO-$ dans lequel R désigne un atome d'hydrogène ou un radical méthyle,

(b) de 20 à 90% en poids d'une résine éopxydique ou d'un mélange de résines éopxydiques thermodurcissables dépourvues de radicaux photopolymérisables,

(c) un durcisseur thermo-activable pour résines époxydiques,

(d) de 0,1 à 2% en poids d'un accélérateur, et

(e) de 0,01% à 5% en poids d'un catalyseurs de photopolymérisation pour la composante (a),

la somme des quantités des composantes (a) à (e) devant faire 100% en poids,

2) on recouvre éventuellement la couche avec une matière de renforcement et on enduit à nouveau avec un mélange selon 1), et

3) on expose la couche ainsi obtenue à une lumière actinique.

2. Procédé selon la revendication 1, caractérisé en ce qu'on utilise, comme composantes (a), des composés répondant à la formule I:

$$[CH_2=C(R)COO]_{\overline{n}}X \quad (I)$$

dans laquelle

R représente un atome d'hydrogène ou un radical méthyle,

n désigne un nombre entier de 1 à 4 et

X représente:

— dans le cas où n est égal à 1, un alkyle en $C_1$-$C_{12}$, un hydroxyalkyle en $C_1$-$C_4$, un alcoxyalkyle en $C_2$-$C_8$, $-CH_2\underbrace{CH-CH_2}_{O}$, un cyclopentyle, un cyclohexyle, un phényle, un furyle-2, un pyridyle-2 ou un pyridyle-3,

— dans le cas où n est égal à 2, un radical $-C_rH_{2r}-$ dont l'indice r représente un nombre de 2 à 12, un radical $-[CH_2CH_2O]_mCH_2CH_2-$ dont l'indice m est égal à 1, à 2 ou à 3, ou un radical:

$$HOCH_2-\overset{\overset{\large CH_2-}{|}}{\underset{\underset{\large CH_2-}{|}}{C}}-CH_2OH,$$

— dans le cas où n est égal à 3, l'un des radicaux suivants:

$$-CH_2-\overset{\overset{\large CH_2-}{|}}{\underset{\underset{\large CH_2-}{|}}{C}}-CH_3, \quad -CH_2-\overset{\overset{\large CH_2-}{|}}{\underset{\underset{\large CH_2-}{|}}{C}}-CH_2CH_3, \quad -CH_2\overset{|}{C}HCH_2-$$

$$\text{et}\quad HOCH_2-\overset{\overset{\large CH_2-}{|}}{\underset{\underset{\large CH_2-}{|}}{C}}-CH_2-$$

et

— dans le cas où n est ègal à 4, l'un des radicaux suivants:

```
        CH2-
        |                     |   |
-CH2-C-CH2-   ou   -CH2CH-CH-CH2- .
        |
        CH2-
```

3. Procédé selon la revendication 2, caractérisé en ce qu'on utilise un composé de formule I dans lequel:

R représente un atome d'hydrogène ou un radical méthyle,

n représente un nombre entier de 1 à 4 et

X représente:

— dans le cas où n est égal à 1, un radical hydroxyalkyle contenant 2 ou 3 atomes de carbone ou un radical alcoxyalkyle contenant de 2 à 6 atomes de carbone,

— dans le cas où n est égale à 2, un radicale $-(CH_2)_r-$ dont l'indice r désigne un nombre de 2 à 6, ou un radical $-CH_2CH_2OCH_2CH_2-$ ou

```
          CH2-
          |
HOCH-C-CH2OH,
          |
          CH2-
```

— dans le cas où n est égal à 3, un radical:

```
        CH2-                          CH2-
        |                             |
-CH2-C-CH2CH3   ou   HOCH2-C-CH2-
        |                             |
        CH2-                          CH2-
```

et

— dans le cas où n est égal à 4, un radical:

```
        CH2-
        |
-CH2-C-CH2- ,
        |
        CH2-
```

ou des mélanges des composés cités.

4. Procédé selon la revendication 1, caractérisé en ce qu'on utilise, comme composante (a), le bisméthacrylate de l'éthylène-glycol, le bis-acrylate ou le bis-méthacrylate du butane-diol-1,4, le bisacrylate ou le bis-méthacrylate de l'hexane-diol-1,6, le bis-acrylate ou le bis-méthacrylate d'hydroxy-2 éthyle, d'hydroxy-2 propyle et d'hydroxy-3 propyle, l'acrylate ou le méthacrylate de méthoxy-2 éthyle ou d'éthoxy-2 éthyle, le tris-acrylate ou le trisméthacrylate du triméthylol-1,1,1 propane, le trisacrylate ou le tris-méthacrylate du pentaérythrol, ou des mélanges de ces composés.

5. Procédé selon la revendication 1, caractérisé en ce qu'on utilise, comme composantes (b), des résines époxydiques qui contiennent en moyenne, lié à un atome S O ou N, plus d'un radical répondant à la formule II:

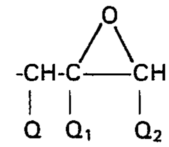

(II)

dans laquelle Q et $Q_2$ représentent chacun un atome d'hydrogène et $Q_1$ représente un atome d'hydrogène ou un radical méthyle, ou Q et $Q_1$ forment ensemble un radical $-CH_2CH_2-$ ou $-CH_2CH_2CH_2-$ et $Q_1$ représente un atome d'hydrogène.

6. Procédé selon la revendication 1, caractérisé en ce qu'on utilise, comme composante (b), un éther diglycidylique, éventuellement pré-allongé, du bis-(hydroxy-4 phényl)-2,2 propane, du bis-(dibromo-3,5 hydroxy-4 phényl)-2,2 propane, du bis-(hydroxy-4 phényl)-méthane, du bis-(hydroxy-4 cyclohexyl)-méthane ou du bis-(hydroxy-4 cyclohexyl)-2,2 propane, un éther polyglycidylique d'une novolaque ou le diamino-4,4' diphénylméthane tétraglycidylé.

7. Procédé selon la revendication 1, caractérisé en ce qu'on utilise, comme composante (b), un éther diglycidylique, éventuellement pré-allongé, du bisphénol A, du tétrabromo-bis-phénol A ou du bisphénol F, un éther polyglycidylique d'une novolaque phénol/formaldéhyde ou crésol/formaldéhyde ou des mélanges de ces composés.

8. Procédé selon la revendication 1, caractérisé en ce qu'on utilise la cyanoguanidine comme durcisseur (c).

9. Procédé selon la revendication 1, caractérisé en ce qu'on utilise, comme accélérateur (d), un composé répondant à la formule III:

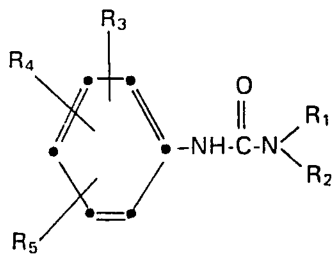

(III)

dans laquelle $R_1$ et $R_2$ représentent chacun, indépendamment l'un de l'autre, un alkyle en $C_1$-$C_4$, $R_3$ et $R_4$ représentent chacun, indépendamment l'un de l'autre, un atome d'hydrogène ou d'halogène, un radicale alkyle ou alcoxy en $C_1$-$C_4$, un radical phényle ou un radicale phénoxy et $R_5$ représente un atome d'hydrogène ou $-CF_3$.

10. Procédé selon la revendication 1, caractérisé en ce qu'on utilise le chlortoluron comme accélérateur (d).

11. Procédé selon la revendication 1, caractérisé en ce q'on utilise le benzile-diméthylacétal comme catalyseur de photopolymérisation (e).

12. Procédé selon la revendication 1, caractérisé en ce qu'on utilise des charges minérales, des surf-

actifs ou des élastomères comme additifs supplémentaires (f), la somme des quantités des composantes (a) à (f) devant être égale à 100% en poids.

13. Procédé selon l'une des revendications 1 et 12, caractérisé en ce qu'on utilise un mélange qui contient de 4 à 20% en poids de la composante (a), de 30 à 90% en poids de la composante (b), de 0,1 à 1,0% en poids de la composante (d) et de 0,02 à 1,0% en poids de la composante (e).

14. Procédé selon la revendication 1, caractérisé en ce qu'on enduit les pellicules adhésives obtenues avec un système thermodurcissable à base d'une résine époxydique, système qui contient:

(i) une résine époxydique — ou un mélange de résines époxydiques — finement dispersée dans:

(ii) un copolymère thermoplastique d'une α-olefine et d'un éther ou d'un ester d'une α-olefine et

(iii) un durcisseur pour la résine époxydique (i).

15. Application des pellicules adhésives obtenues selon l'une des revendications 2 à 14 pour le collage de substrats.